# EUROPEAN PATENT APPLICATION

(11) **EP 4 723 603 A1**
(43) Date of publication of application: **08.04.2026**
(21) Application number: 24930283.7
(22) Date of filing: 28.06.2024
(51) Int. Cl.: H04M 1/02, H04N 23/00, H04N 5/00

(54) **TERMINAL STRUCTURE ASSEMBLY AND TERMINAL DEVICE**

(30) Priority: 18.03.2024 CN 202410323433
(71) Applicant: Huawei Technologies Co., Ltd., Shenzhen, Guangdong 518129 (CN)
(72) Inventor: LV, Ren, Shenzhen, Guangdong 518129 (CN); MAO, Weihua, Shenzhen, Guangdong 518129 (CN); LI, Peng, Shenzhen, Guangdong 518129 (CN)
(74) Representative: MERH-IP Matias Erny Reichl Hoffmann Patentanwälte PartG mbB
(86) International application number: PCT/CN2024/102617
(87) International publication number: WO 2025/194619

(57) **Abstract**

A terminal structural component and a terminal device are provided and relate to the field of electronic technologies. The terminal structural component includes a lens component, a middle frame, and a cover plate component. Part of the lens component is located in an accommodation groove of the middle frame. The cover plate component includes a first cover plate and a second cover plate. An optical axis direction of the lens component is a first direction. At least part of the middle frame, at least part of the first cover plate, and part of the second cover plate are sequentially connected in the first direction. The first cover plate is provided with a through hole. The second cover plate closes the through hole. The lens component is between the second cover plate and a bottom wall of the accommodation groove. The through hole is in communication with the accommodation groove. Part of the lens component is located in the through hole, so that a length of the lens component and a thickness of the first cover plate partially overlap in the first direction. On the premise of accommodation of the lens component, a thickness of the terminal structural component in the first direction is reduced, which is conducive to lightness and thinness of the terminal structural component.

## Description

This application claims priority to Chinese Patent Application No. 202410323433.4, filed with the China National Intellectual Property Administration on March 18, 2024 and entitled "TERMINAL STRUCTURAL COMPONENT AND TERMINAL DEVICE", which is incorporated herein by reference in its entirety.

### TECHNICAL FIELD

This application relates to the field of electronic technologies, and in particular, to a terminal structural component and a terminal device.

### BACKGROUND

With the rapid development of terminal devices equipped with cameras, there are requirements for both imaging quality of the cameras and portability of the terminal devices. To improve imaging quality of a camera, an optical system of the camera usually needs to have a relatively large optical length, which increases a total length of the camera. To improve portability of a terminal device, a thickness of the terminal device usually needs to be compressed. When a camera is installed on the terminal device, a length direction of the camera is the same as a thickness direction of the terminal device. A terminal device with a small thickness can hardly accommodate a camera with a large total length. A terminal device equipped with a camera having good imaging quality has a large thickness, reducing portability of the terminal device. Therefore, there is a need for a trade-off between portability of the terminal device and imaging quality of the camera.

### SUMMARY

This application provides a terminal structural component and a terminal device. A through hole is provided in a first cover plate, and part of a lens component is located in the through hole. In this way, the lens component and a cover plate component partially overlap in a thickness direction, thereby reducing an overall thickness of the lens component and the cover plate component, and enabling lightness and thinness of the terminal device while ensuring that a length of the lens component remains unchanged.

According to a first aspect, this application provides a terminal structural component. The terminal structural component includes: a lens component, where an optical axis direction of the lens component is a first direction; a middle frame, provided with an accommodation groove, where part of the lens component is located in the accommodation groove; and a cover plate component, including a first cover plate and a second cover plate, where at least part of the middle frame, at least part of the first cover plate, and part of the second cover plate are sequentially connected in the first direction, the first cover plate is provided with a through hole that is in communication with the accommodation groove, part of the lens component is located in the through hole, the second cover plate closes the through hole, and the lens component is located between the second cover plate and a bottom wall of the accommodation groove.

The terminal structural component provided in this application includes the lens component, the middle frame, and the cover plate component. The middle frame is provided with the accommodation groove. Part of the lens component is located in the accommodation groove. The lens component is secured to the bottom wall of the accommodation groove, so that the middle frame supports and secures the lens component, ensuring stability of a position of the lens component relative to the middle frame. The cover plate component includes the first cover plate and the second cover plate. The middle frame, the first cover plate, and the second cover plate are sequentially connected in the first direction. At least part of the middle frame is connected to at least part of the first cover plate, and at least part of the first cover plate is connected to part of the second cover plate. This is conducive to ensuring a connection area between the first cover plate and the middle frame, and between the second cover plate and the first cover plate, thereby improving stability of a connection structure for the middle frame and the cover plate component. The cover plate component and the middle frame have relatively strong impact resistance, thereby ensuring protection of the lens component by the cover plate component and the middle frame. The cover plate component closes an opening of the accommodation groove, and the cover plate component and the bottom wall of the accommodation groove clamp the lens component, thereby further securing the position of the lens component.

The first cover plate is provided with a through hole, and the second cover plate is connected to the first cover plate and closes the through hole, thereby ensuring protection of the lens component by the first cover plate and the second cover plate. In addition, the first cover plate and the second cover plate are connected, so that an external impact force on the cover plate component can be distributed to the first cover plate and the second cover plate, thereby improving impact resistance of the cover plate component. Part of the lens component extends in the first direction from the opening of the accommodation groove into the through hole, so that a length of the lens component and a thickness of the first cover plate partially overlap in the first direction. On the premise of accommodation of the lens component by the terminal structural component, the thickness of the terminal structural component in the first direction is reduced, which is conducive to lightness and thinness of the terminal structural component, thereby improving portability of the terminal structural component.

In a possible implementation, the first cover plate has an outer surface that is a surface of the first cover plate facing away from the middle frame in the first direction, the outer surface is provided with a first groove that surrounds and is in communication with the through hole, the first groove is configured to accommodate the second cover plate, and the second cover plate is connected to a bottom wall of the first groove. The outer surface of the first cover plate is provided with the first groove, and the first groove accommodates the second cover plate, so that a thickness of the second cover plate and a depth of the first groove at least partially overlap in the first direction; that is, the thickness of the second cover plate and the thickness of the first cover plate at least partially overlap in the first direction, thereby reducing the thickness of the cover plate component in the first direction, that is, reducing the thickness of the terminal structural component in the first direction. This is conducive to lightness and thinness of the terminal structural component.

In a possible implementation, the outer surface is provided with a protruding portion surrounding a periphery of the first groove. The outer surface of the first cover plate is provided with the protruding portion, and the protruding portion surrounds at the periphery of the first groove, so that the protruding portion can limit the second cover plate in a direction perpendicular to the first direction, which is conducive to improving stability of a position of the second cover plate.

In a possible implementation, in the first direction, a height of the second cover plate relative to the bottom wall of the first groove is less than or equal to a height of the protruding portion relative to the bottom wall of the first groove. In the first direction, the height of the second cover plate relative to the bottom wall of the first groove is less than or equal to the height of the protruding portion relative to the bottom wall of the first groove, so that the second cover plate is completely accommodated in the first groove. The side wall of the first groove provides a better effect of limiting the second cover plate, which is conducive to improving stability of the position of the second cover plate.

In a possible implementation, the middle frame includes a first middle frame and a second middle frame that are rotatably connected, the first middle frame is provided with the accommodation groove, the first cover plate includes a primary cover plate and a secondary cover plate, the primary cover plate is connected to the first middle frame and is provided with the protruding portion, and the secondary cover plate is connected to the second middle frame and is provided with a receiving groove configured to accommodate the protruding portion. The middle frame includes the first middle frame and the second middle frame that are rotatably connected, the first cover plate includes the primary cover plate and the secondary cover plate, the primary cover plate is connected to the first middle frame, the secondary cover plate is connected to the second middle frame, the primary cover plate is provided with the protruding portion, and the secondary cover plate is provided with the receiving groove. In this way, when the first middle frame and the second middle frame rotate to a folded state, the receiving groove can accommodate the protruding portion. This is conducive to reduction of the thickness of the terminal structural component in the first direction when the middle frame is in the folded state, enabling miniaturization of the terminal structural component.

In a possible implementation, the terminal structural component further includes a connecting member. The first middle frame and the second middle frame are rotatably connected via the connecting member, and when the first middle frame and the second middle frame are in a folded state, the receiving groove accommodates the protruding portion. The terminal structural component further includes the connecting member, and the first middle frame and the second middle frame rotate relative to each other about the connecting member as a pivot, which is conducive to simplifying a relative rotation process of the first middle frame and the second middle frame. When the first middle frame and the second middle frame rotate to the folded state, the receiving groove accommodates the protruding portion, thereby reducing the thickness of the terminal structural component in the first direction, and enabling miniaturization of the terminal structural component.

In a possible implementation, in the first direction, a spacing distance between the bottom wall of the first groove and the outer surface is less than a height of the second cover plate relative to the bottom wall of the first groove. In the first direction, the spacing distance between the bottom wall of the first groove and the outer surface is less than the height of the second cover plate relative to the bottom wall of the first groove, so that the second cover plate protrudes from the outer surface of the first cover plate in the first direction. This can properly reduce the depth of the first groove in the first direction, so that the first cover plate has a specific thickness at the first groove, ensuring structural strength of the first cover plate at the first groove. The first cover plate has strong impact resistance, which is conducive to ensuring the protection of the lens component by the cover plate component.

In a possible implementation, in the first direction, a thickness of the second cover plate is less than a thickness of the first cover plate, and hardness of the second cover plate is greater than hardness of the first cover plate. The thickness of the second cover plate is less than the thickness of the first cover plate, and the hardness of the second cover plate is greater than the hardness of the first cover plate, so that the thickness of the second cover plate is relatively small, and the first groove can better accommodate and limit the second cover plate. In addition, the second cover plate has a specific structural strength when the thickness is relatively small, ensuring protection of the lens component by the cover plate component while the thickness of the cover plate component in the first direction is reduced.

In a possible implementation, in the first direction, a surface of the middle frame facing the first cover plate is provided with a second groove that surrounds an opening of the accommodation groove and is in communication with the accommodation groove, the second groove is configured to accommodate the first cover plate, and the first cover plate is connected to a bottom wall of the second groove. The surface of the middle frame facing the first cover plate is provided with the second groove, the second groove surrounds the opening of the accommodation groove, and the second groove accommodates the first cover plate, so that the thickness of the first cover plate and the depth of the second groove at least partially overlap in the first direction; that is, the thickness of the first cover plate and the thickness of the middle frame at least partially overlap in the first direction, thereby reducing a thickness of the terminal structural component in the first direction. This is conducive to lightness and thinness of the terminal structural component.

In a possible implementation, a projection of the second cover plate in the first direction partially overlaps a projection of the middle frame in the first direction. The projection of the second cover plate in the first direction partially overlaps the projection of the middle frame in the first direction, and the middle frame can indirectly support the second cover plate in the first direction, so that the middle frame and the first cover plate are both configured to support the second cover plate, which is conducive to improving stability of the position of the second cover plate.

According to a second aspect, this application further provides a terminal device. The terminal device includes a terminal structural component according to any one of the foregoing implementations of the first aspect and a screen. At least part of the screen is connected to at least part of the middle frame in the first direction, and the screen is located on a side of the middle frame that is away from the cover plate component. Beneficial effects of this embodiment are similar to those of the foregoing embodiment, and are not repeated in this embodiment.

In a possible implementation, the bottom wall of the accommodation groove is provided with a lens hole, the screen closes the lens hole, a surface of the screen facing the middle frame is provided with an avoidance groove, in the first direction, that is in communication with the lens hole, the lens component protrudes from the lens hole, and part of the lens component is located in the avoidance groove. The bottom wall of the accommodation groove is provided with the lens hole, the surface of the screen facing the middle frame is provided with the avoidance groove, the avoidance groove is in communication with the lens hole, the lens component protrudes from the lens hole, and part of the lens component is located in the avoidance groove. In this way, on the premise of accommodation of the lens component by the terminal device, the length of the lens component and the thickness of the avoidance groove partially overlap in the first direction, the terminal device is reduced by a thickness of an overlapping part between the lens component and the screen in the first direction, and a thickness of the terminal device in the first direction is reduced. This is conducive to lightness and thinness of the terminal device, thereby improving portability of the terminal device.

In a possible implementation, the terminal device further includes a speaker module fixedly connected to the middle frame. The lens component is provided with a bracket, the speaker module is provided with a first abutting portion, the middle frame is provided with a second abutting portion, the bracket is located between the first abutting portion and the second abutting portion in the first direction, the first abutting portion abuts against the bracket in the first direction, and the second abutting portion abuts against the bracket in a reverse direction of the first direction. The terminal device further includes the speaker module, the speaker module is fixedly connected to the middle frame, the lens component is provided with the bracket, the speaker module is provided with the first abutting portion, the middle frame is provided with the second abutting portion, and the first abutting portion and the second abutting portion respectively apply opposing forces to the bracket in the first direction, so that the middle frame and the speaker module clamp to secure the lens component, which is conducive to improving stability of the position of the lens component.

### BRIEF DESCRIPTION OF DRAWINGS

FIG. 1 is a diagram of a structure of a terminal structural component according to an implementation of this application;
FIG. 2 is a sectional view, along A-A, of the terminal structural component according to the implementation shown in FIG. 1;
FIG. 3 is an enlarged view, at a, of the terminal structural component according to the implementation shown in FIG. 2;
FIG. 4 is an enlarged view, at b, of the terminal structural component according to the implementation shown in FIG. 3;
FIG. 5 is a schematic sectional view of a structure of a middle frame and a cover plate component according to the implementation shown in FIG. 3;
FIG. 6 is a sectional view, along B-B, of the middle frame and the cover plate component according to the implementation shown in FIG. 5;
FIG. 7 is a sectional perspective view, along A-A, and a partial enlarged view of the terminal structural component according to the implementation shown in FIG. 1;
FIG. 8 is an exploded view of the terminal structural component according to the implementation shown in FIG. 1;
FIG. 9 is a diagram of a structure of a first cover plate according to an implementation of this application;
FIG. 10 is a side view and a partial enlarged view of a first cover plate according to an implementation of this application;
FIG. 11 is a diagram of a structure of a middle frame according to an implementation of this application;
FIG. 12 is a sectional view, along C-C, and a partial enlarged view of the middle frame according to the implementation shown in FIG. 11;
FIG. 13 is a diagram of a structure of a terminal device according to an implementation of this application;
FIG. 14 is a sectional view, along D-D, of the terminal device according to the implementation shown in FIG. 13;
FIG. 15 is an enlarged view, at c, of the terminal device according to the implementation shown in FIG. 14;
FIG. 16 is a sectional perspective view, along D-D, and a partial enlarged view of the terminal device according to the implementation shown in FIG. 13;
FIG. 17 is an exploded view of the terminal device according to the implementation shown in FIG. 13;
FIG. 18 is a diagram of a folded structure of the terminal device according to the implementation shown in FIG. 13;
FIG. 19 is a sectional view, along F-F, and a partial enlarged view of the terminal device according to the implementation shown in FIG. 18;
FIG. 20 is a sectional perspective view, along F-F, and a partial enlarged view of the terminal device according to the implementation shown in FIG. 18;
FIG. 21 is a diagram of a structure of a terminal device without a primary cover plate according to an implementation of this application;
FIG. 22 is a sectional view, along E-E, and a partial enlarged view of the terminal device according to the implementation shown in FIG. 13; and
FIG. 23 is a diagram of a structure of a positioning member according to an implementation of this application.

### DESCRIPTION OF EMBODIMENTS

Embodiments of this application are described below with reference to the accompanying drawings for embodiments of this application.

For ease of understanding, English abbreviations and related technical terms used in embodiments of this application are first explained and described below.

It should be noted that the described embodiments are merely some rather than all of embodiments of this application. All other embodiments obtained by a person of ordinary skill in the art based on embodiments of this application without creative efforts shall fall within the scope of protection of this application.

The terms used in the embodiments of this application are merely for the purpose of illustrating specific embodiments, and are not intended to limit this application. The terms "a", "said" and "the" of singular forms used in embodiments and the appended claims of this application are also intended to include plural forms, unless otherwise specified in the context clearly.

It should be understood that the term "and/or" in this specification describes only a same field for describing associated objects and indicates that three relationships may exist. For example, A and/or B may indicate the following three cases: Only A exists, both A and B exist, and only B exists. In addition, the character "/" in this specification generally indicates an "or" relationship between the associated objects.

Depending on the context, for example, the term "if" as used herein may be explained as "when", "while", "in response to determining", or "in response to detecting". Similarly, depending on the context, the phrase "if determining" or "if detecting (a stated condition or event)" may be explained as "when determining", "in response to determining", "when detecting (the stated condition or event)", or "in response to detecting (the stated condition or event)".

It should be understood that "first", "second", and the like used in this application are merely used for distinguishing and description, but cannot be understood as an indication or implication of relative importance or an indication or implication of a sequence.

In the description of this application, orientation or position relationships indicated by terms "center", "upper", "lower", "front", "rear", "left", "right", "vertical", "horizontal", "top", "bottom", "inner", "outer", and the like are based on orientation or position relationships shown in the accompanying drawings, and are used only for ease and brevity of description of this application, rather than indicating or implying that a specified apparatus or component needs to have a specific orientation, and be constructed and operated in the specific orientation. Therefore, this cannot be understood as a limitation on this application.

In the description of this application, it should be noted that due to a manufacturing error or an assembly error, there is some angle deviation in a design that should be vertical or parallel, for example, a deviation within 15 degrees, which is also considered as vertical or parallel in this implementation.

For "within a range of ..." used in this application, except when it is separately specified that end values are excluded, end values at both ends of the range are included by default. For example, within a range of 1 to 5 indicates that the two values 1 and 5 are included.

In the description of this application, it should be noted that, unless otherwise expressly specified and limited, terms such as "mount", "interconnect", and "connect" should be understood in a broad sense, for example, may be a fixed connection, a detachable connection, an abutting connection, or an integral connection. A person of ordinary skill in the art may understand specific meanings of the foregoing terms in this application according to specific situations.

It should be understood that, in this application, an "electrical connection" may be understood as physical contact and electrical conduction between components, or may be understood as a form in which different components in a line structure are connected via physical lines that can transmit an electrical signal, such as a printed circuit board (printed circuit board, PCB) copper foil or conductor. Both "connected" and "connection" may refer to a mechanical connection relationship or a physical connection relationship. For example, A is connected to B or a connection between A and B may mean that there is a fastening component (for example, a screw, a bolt, or a nail) between A and B, or A and B are in contact with each other and A and B are difficult to be separated.

With the rapid development of terminal devices equipped with cameras, there are requirements for both imaging quality of the cameras and portability of the terminal devices.

To improve imaging quality of a camera and provide a better photographing experience, an optical system of the camera is required to have a higher resolution and imaging quality. Generally, a quantity of lenses in the optical system needs to be increased, or a lens in the optical system is allowed to move in a relatively large range along an optical axis. All these increase a total optical length of the optical system, which eventually increases a total length of the camera.

To improve portability of a terminal device and provide a better use experience, a thickness of the terminal device usually needs to be compressed. When a camera is installed on the terminal device, an extension direction of an optical axis of an optical system of the camera is the same as a thickness direction of the terminal device, so that a length direction of the camera is the same as a thickness direction of the terminal device. A terminal device with a small thickness can hardly accommodate a camera with a large total length. A minimum thickness of the terminal device is limited by a total length of the camera. As a result, a terminal device equipped with a camera having good imaging quality has a large thickness, reducing portability of the terminal device. Therefore, there is a need for a trade-off between portability of the terminal device and imaging quality of the camera.

In addition, to carry and protect the camera, it is further required to provide a corresponding securing structure that supports and is connected to the camera, as well as a housing of a specific thickness that covers the camera, which prevents damage to the camera when the camera is subject to an external impact force, thereby enabling protection of the camera. The provision of the securing structure and the housing further increases a thickness of the terminal device at a position of the camera, which is not conducive to lightness and thinness of the terminal device.

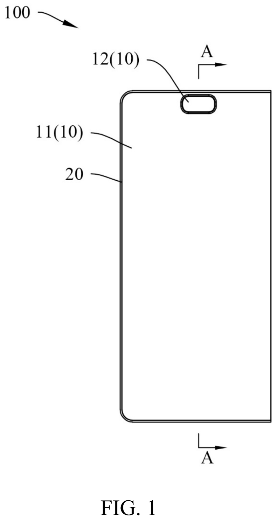

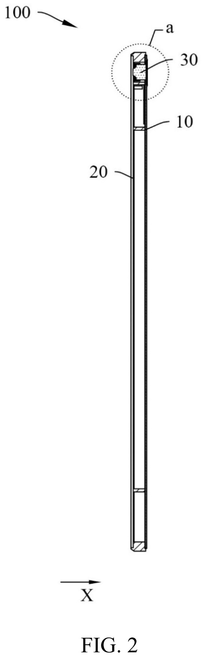

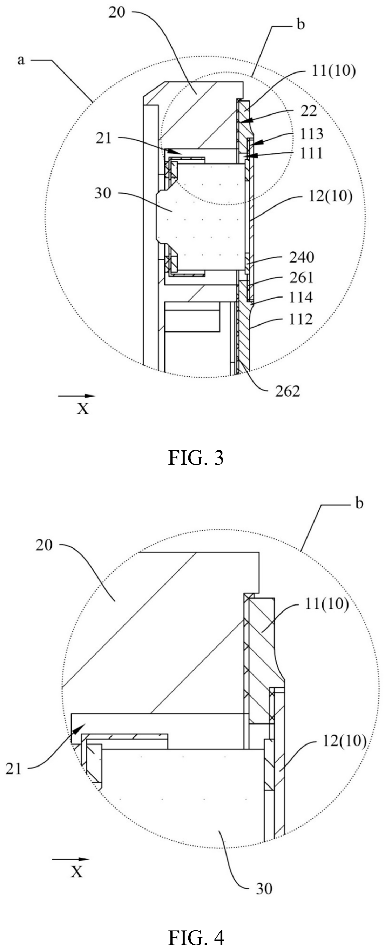

This application provides a terminal structural component 100. Refer to FIG. 1, FIG. 2, and FIG. 3, where FIG. 1 is a diagram of a structure of a terminal structural component 100 according to an implementation of this application, FIG. 2 is a sectional view, along A-A, of the terminal structural component 100 according to the implementation shown in FIG. 1, and FIG. 3 is an enlarged view, at a, of the terminal structural component 100 according to the implementation shown in FIG. 2. The terminal structural component 100 includes a lens component 30, a middle frame 20, and a cover plate component 10. The middle frame 20 is provided with an accommodation groove 21. Part of the lens component 30 is located in the accommodation groove 21. The middle frame 20 supports and is connected to the lens component 30, to ensure stability of a position of the lens component 30 relative to the middle frame 20, thereby enabling securing and protection of the lens component 30 by the middle frame 20. The cover plate component 10 is connected to a surface of one side of the middle frame 20. The cover plate component 10 is configured to close an opening of the accommodation groove 21. The lens component 30 is located between the cover plate component 10 and the middle frame 20.

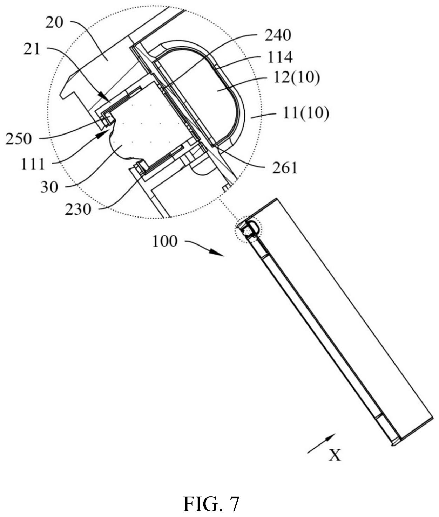

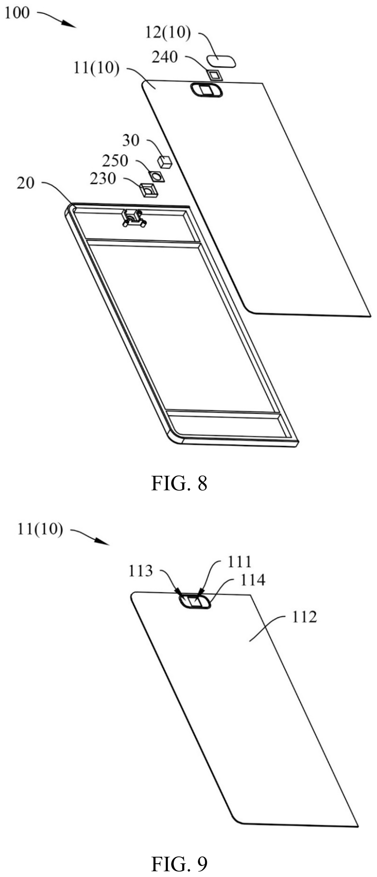

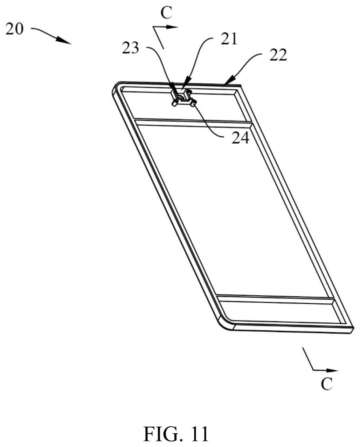

Refer to FIG. 7, FIG. 8, and FIG. 11, where FIG. 7 is a sectional perspective view, along A-A, and a partial enlarged view of the terminal structural component 100 according to the implementation shown in FIG. 1, FIG. 8 is an exploded view of the terminal structural component 100 according to the implementation shown in FIG. 1, and FIG. 11 is a diagram of a structure of a middle frame 20 according to an implementation of this application. When the lens component 30 is located in the accommodation groove 21, the middle frame 20 and the cover plate component 10 enclose the lens component 30, and they jointly enable protection of the lens component 30 and prevent damage to the lens component 30 when the lens component is subject to an external impact force. In addition, an enclosed space is formed inside the accommodation groove 21, preventing external substances such as dust from entering the lens component 30 and affecting an imaging effect of the lens component 30.

An optical axis of the lens component 30 is an axis of symmetry of each component in the lens component 30. The lens component 30 includes a lens. The optical axis of the lens component 30 passes through a center of spherical surface of the lens, and is perpendicular to a lens surface of the lens. At the center point of spherical surface, no refraction occurs between incident and emergent light rays of the lens. When there are at least two lenses in the lens component 30, the optical axis of the lens component 30 passes through centers of spherical surface of the at least two lenses.

An extension direction of the optical axis of the lens component 30 is a first direction. A thickness direction of the middle frame 20 is the same as the first direction. A surface of one side of the middle frame 20 in the first direction (an X direction as in FIG. 2 and FIG. 3) is provided with an accommodation groove 21. Part of the lens component 30 is located in the accommodation groove 21. The lens component 30 is fixed relative to a bottom wall of the accommodation groove 21. There is a spacing distance between the lens component 30 and a side wall of the accommodation groove 21. This provides a larger space for the accommodation groove 21 to accommodate the lens component 30, simplifies installation of the lens component 30 in the accommodation groove 21, and is further conducive to preventing interference between the lens component 30 and the side wall of the accommodation groove 21.

Refer to FIG. 3 and FIG. 4, where FIG. 4 is an enlarged view, at b, of the terminal structural component according to the implementation shown in FIG. 3. The cover plate component 10 includes a first cover plate 11 and a second cover plate 12. The first cover plate 11 is located on a side of the middle frame 20 in the first direction. The second cover plate 12 is located on a side of the first cover plate 11 that is away from the middle frame 20 in the first direction. The middle frame 20, the first cover plate 11, and the second cover plate 12 are sequentially connected in the first direction. At least part of the middle frame 20 is connected to at least part of the first cover plate 11. A projection area of the first cover plate 11 in the first direction is less than or equal to a projection area of the middle frame 20 in the first direction. In addition, a projection of the first cover plate 11 in the first direction falls within a projection of the middle frame 20 in the first direction, or a projection of the first cover plate 11 in the first direction completely overlaps a projection of the middle frame 20 in the first direction.

In an embodiment, the projection area of the first cover plate 11 in the first direction is less than the projection area of the middle frame 20 in the first direction, the projection of the first cover plate 11 in the first direction falls within the projection of the middle frame 20 in the first direction, and in a direction perpendicular to the first direction, there is a spacing distance between the first cover plate 11 and the surrounding edges of the middle frame 20 (refer to FIG. 1). This prevents the first cover plate 11 from protruding from the surrounding edges of the middle frame 20, which is conducive to improving aesthetics of the terminal structural component 100. When the first cover plate 11 protrudes from the surrounding edges of the middle frame 20, a protruding part of the first cover plate 11 is susceptible to impact of external objects. Therefore, the provision of the spacing distance between the first cover plate 11 and the surrounding edges of the middle frame 20 is further conducive to extending the service life of the first cover plate 11. This prevents the first cover plate 11 from impact of external objects affecting stability of a connection between the first cover plate 11 and the middle frame 20, thereby improving structural stability of the terminal structural component 100.

Refer to FIG. 9, where FIG. 9 is a diagram of a structure of a first cover plate according to an implementation of this application. The first cover plate 11 is provided with a through hole 111. The through hole 111 extends in the first direction through the first cover plate 11. The through hole 111 is in communication with the accommodation groove 21. Part of the lens component 30 extends in the first direction from the opening of the accommodation groove 21 into the through hole 111, so that one part of the lens component 30 is located in the accommodation groove 21 of the middle frame 20, and the other part of the lens component 30 is located in the through hole 111 of the first cover plate 11. Both the accommodation groove 21 and the through hole 111 are configured to accommodate the lens component 30. In the first direction, a total thickness of the middle frame 20 and the first cover plate 11 is greater than or equal to a length of the lens component 30, so that the middle frame 20 and the first cover plate 11 can accommodate the lens component 30.

On the premise of accommodation of the lens component 30 by the terminal structural component 100, the through hole 111 is provided in the first cover plate 11. The length of the lens component 30 and a thickness of the first cover plate 11 partially overlap in the first direction, so that the terminal structural component 100 is reduced by a thickness of an overlapping part between the lens component 30 and the first cover plate 11 in the first direction, and a thickness of the terminal structural component 100 in the first direction is reduced. When the first cover plate 11 is not provided with the through hole 111, and the lens component 30 is located only in the accommodation groove 21 of the middle frame 20, to accommodate the lens component 30, the thickness of the middle frame 20 in the first direction needs to be greater than or equal to the length of the lens component 30. Compared with this, the total thickness of the middle frame 20 and the first cover plate 11 in the first direction is reduced; that is, the thickness of the terminal structural component 100 in the first direction is reduced, which is conducive to lightness and thinness of the terminal structural component 100, thereby improving portability of the terminal structural component 100.

In some embodiments, there is a spacing distance between the lens component 30 and an inner wall of the through hole 111. This provides a larger space for the through hole 111 to accommodate the lens component 30, simplifies installation of the first cover plate 11, and prevents interference between the first cover plate 11 and the lens component 30.

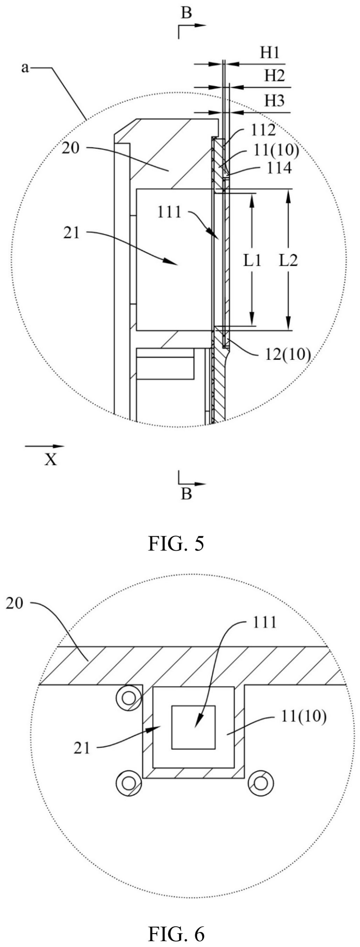

In an embodiment, refer to FIG. 5 and FIG. 6, where FIG. 5 is a schematic sectional view of a structure of the middle frame 20 and the cover plate component 10 according to the implementation shown in FIG. 3, and FIG. 6 is a sectional view, along B-B, of the middle frame and the cover plate component according to the implementation shown in FIG. 5. An area of the through hole 111 is less than an area of the opening of the accommodation groove 21. A projection of an edge of the through hole 111 in the first direction (an X direction as in FIG. 5) falls within a projection of an edge of the opening of the accommodation groove 21 in the first direction. The first cover plate 11 partially covers the opening of the accommodation groove 21 (refer to FIG. 6). The edge of the through hole 111 protrudes from the edge of the opening of the accommodation groove 21 in all directions perpendicular to the first direction, to improve uniformity of coverage of the opening of the accommodation groove 21 by the first cover plate 11.

For example, with reference to FIG. 6, both a shape of the through hole 111 and a shape of the opening of the accommodation groove 21 are square, with a side length of the through hole 111 being L1, and a side length of the opening of the accommodation groove 21 being L2. The through hole 111 and the accommodation groove 21 meet a relation: L1<L2, so that the area of the through hole 111 is less than the area of the opening of the accommodation groove 21.

The area of the through hole 111 is less than the area of the opening of the accommodation groove 21, so that structures of the middle frame 20 and the first cover plate 11 are transitioned near the opening of the accommodation groove 21, and a size of the through hole 111 is appropriately reduced. This is conducive to improving structural strength of the first cover plate 11, and ensures sufficient impact resistance of the first cover plate 11, that is, ensures protection of the lens component 30 by the first cover plate 11. For example, shapes of the through hole 111 and the opening of the accommodation groove 21 are both circular, a center of the through hole 111 and a center of the opening of the accommodation groove 21 are on a same straight line that extends in the first direction, and a diameter of the through hole 111 is less than a diameter of the opening of the accommodation groove 21.

With reference to FIG. 3 and FIG. 8, an edge of the second cover plate 12 is connected to the first cover plate 11, a central area of the second cover plate 12 closes the through hole 111, and the second cover plate 12 completely covers the through hole 111 in the first direction. Because part of the second cover plate 12 corresponds to the through hole 111, the first cover plate 11 is connected to part of the second cover plate 12 that does not cover the through hole. The first cover plate 11 may be completely connected to the second cover plate 12, or the first cover plate 11 may be partially connected to the second cover plate 12. For example, a projection area of the second cover plate 12 in the first direction is less than a projection area of the first cover plate 11 in the first direction, and part of the first cover plate 11 is connected to part of the second cover plate 12.

An area of the second cover plate 12 is greater than or equal to the area of the through hole 111; that is, a projection area of the second cover plate 12 in the first direction is greater than or equal to a projection area of the edge of the through hole 111 in the first direction. In addition, the projection of the edge of the through hole 111 in the first direction falls within a projection of the second cover plate 12 in the first direction.

The second cover plate 12 is connected to an edge of the first cover plate 11 that encloses the through hole 111. In an implementation, with reference to FIG. 5, the area of the second cover plate 12 is greater than the area of the through hole 111, and the second cover plate 12 is connected to a surface of a side of the first cover plate 11 that is away from the middle frame 20, so that in the first direction (the X direction as in FIG. 5), one part of the second cover plate 12 is opposite the through hole 111, and the other part of the second cover plate 12 is opposite the first cover plate 11. The first cover plate 11 is connected to and supports the second cover plate 12, which is conducive to improving stability of a connection between the second cover plate 12 and the first cover plate 11. A structure of the cover plate component 10 is more stable, and the second cover plate 12 is not easily detached from the first cover plate 11, thereby ensuring sealing of the through hole 111 by the second cover plate 12. In this way, there is good sealing performance inside the accommodation groove 21, preventing external substances such as dust from entering the lens component 30, thereby ensuring an imaging effect of the lens component 30. In addition, the first cover plate 11 and the second cover plate 12 have stronger impact resistance, further improving protection of the lens component 30 by the first cover plate 11 and the second cover plate 12.

When the second cover plate 12 closes the through hole 111, the lens component 30 is located between the second cover plate 12 and the bottom wall of the accommodation groove 21. The second cover plate 12 and the bottom wall of the accommodation groove 21 respectively apply opposing forces in the first direction to the lens component 30. The second cover plate 12 and the bottom wall of the accommodation groove 21 clamp to secure the lens component 30. The lens component 30 is sandwiched between the second cover plate 12 and the bottom wall of the accommodation groove 21, which is conducive to further improving stability of a position of the lens component 30.

The first cover plate 11 and the second cover plate 12 are located on a same side of the lens component 30 in the first direction. The first cover plate 11 and the second cover plate 12 can resist and absorb an external impact force, thereby protecting the lens component 30. When the terminal structural component 100 includes only the first cover plate 11, the first cover plate 11 is provided with a groove in communication with the accommodation groove 21, one part of the lens component 30 is located in the accommodation groove 21, and the other part of the lens component 30 extends in the first direction from the opening of the accommodation groove 21 into the groove on the first cover plate 11, the length of the lens component 30 and the thickness of the first cover plate 11 partially overlap in the first direction, which can also reduce the thickness of the terminal structural component 100 in the first direction. However, the first cover plate 11 has a relatively small thickness at the groove, so that the first cover plate 11 has a relatively low structural strength at the groove and is easily damaged due to impact. In addition, the first cover plate 11 has a problem of stress concentration at a joint between a side wall and a bottom wall of the groove, which is susceptible to a notch effect resulting in reduced impact resistance of the first cover plate 11 and reduced protection of the lens component 30 by the first cover plate 11. The terminal structural component 100 includes the first cover plate 11 and the second cover plate 12 that are connected to each other. The first cover plate 11 is provided with the through hole 111. The second cover plate 12 is connected to the first cover plate 11, and the second cover plate 12 covers the through hole 111. This is conducive to partially overlapping the length of the lens component 30 and the thickness of the first cover plate 11 in the first direction, thereby reducing the thickness of the terminal structural component 100 in the first direction. This is further conducive to improving structural strength of the first cover plate 11 and the second cover plate 12. In this way, an external impact force on the terminal structural component 100 is distributed to the first cover plate 11 and the second cover plate 12, improving impact resistance of the first cover plate 11 and the second cover plate 12, thereby ensuring protection of the lens component 30 by the first cover plate 11 and the second cover plate 12.

This application provides a terminal structural component 100. The terminal structural component 100 includes a lens component 30, a middle frame 20, and a cover plate component 10. The middle frame 20 is provided with an accommodation groove 21. Part of the lens component 30 is located in the accommodation groove 21. The lens component 30 is secured to a bottom wall of the accommodation groove 21, so that the middle frame 20 supports and secures the lens component 30, ensuring stability of a position of the lens component 30 relative to the middle frame 20. The cover plate component 10 includes a first cover plate 11 and a second cover plate 12. The middle frame 20, the first cover plate 11, and the second cover plate 12 are sequentially connected in the first direction. At least part of the middle frame 20 is connected to at least part of the first cover plate 11, and at least part of the first cover plate 11 is connected to part of the second cover plate 12. This is conducive to ensuring a connection area between the first cover plate 11 and the middle frame 20, and between the second cover plate 12 and the first cover plate 11, thereby improving stability of a connection structure for the middle frame 20 and the cover plate component 10. The cover plate component 10 and the middle frame 20 have relatively strong impact resistance, thereby ensuring protection of the lens component 30 by the cover plate component 10 and the middle frame 20. The cover plate component 10 closes an opening of the accommodation groove 21, and the cover plate component 10 and the bottom wall of the accommodation groove 21 clamp the lens component 30, thereby further securing the position of the lens component 30.

The first cover plate 11 is provided with a through hole 111, and the second cover plate 12 is connected to the first cover plate 11 and closes the through hole 111. In this way, an external impact force on the cover plate component 10 can be distributed to the first cover plate 11 and the second cover plate 12, improving impact resistance of the cover plate component 10, thereby ensuring protection of the lens component 30 by the first cover plate 11 and the second cover plate 12. Part of the lens component 30 extends in the first direction from the opening of the accommodation groove 21 into the through hole 111, so that a length of the lens component 30 and a thickness of the first cover plate 11 partially overlap in the first direction. On the premise of accommodation of the lens component 30 by the terminal structural component 100, the thickness of the terminal structural component 100 in the first direction is reduced, which is conducive to lightness and thinness of the terminal structural component 100, thereby improving portability of the terminal structural component 100.

In a possible implementation, with reference to FIG. 3, FIG. 7, FIG. 8, and FIG. 9, the first cover plate 11 has an outer surface 112. The outer surface 112 is a surface of the first cover plate 11 facing away from the middle frame 20 in the first direction (the X direction as in FIG. 3). The outer surface 112 is provided with a first groove 113; that is, an opening and a bottom wall of the first groove 113 are disposed opposite to each other in the first direction.

The first groove 113 is configured to accommodate the second cover plate 12. The second cover plate 12 is connected to the bottom wall of the first groove 113. The bottom wall of the first groove 113 is further configured to support the second cover plate 12. For example, the bottom wall of the first groove 113 can both support and be connected to the second cover plate 12. Compared with a case in which the bottom wall of the first groove 113 supports the second cover plate 12 and a side wall of the first groove 113 is connected to the second cover plate 12, the bottom wall of the first groove 113 both supporting and being connected to the second cover plate 12 is conducive to simplifying a process of connecting the second cover plate 12 and the first cover plate 11. In addition, because the thickness of the first cover plate 11 in the first direction needs to be compressed, an area of the side wall of the first groove 113 is relatively small. If the second cover plate 12 is connected to the side wall of the first groove 113, a connection area between the second cover plate 12 and the first cover plate 11 is relatively small, which is not conducive to stability of a connection between the second cover plate 12 and the first cover plate 11. The second cover plate 12 being connected to the bottom wall of the first groove 113 is conducive to making full use of space of the first cover plate 11 perpendicular to the first direction, ensuring that there is a relatively large connection area between the second cover plate 12 and the first cover plate 11, thereby ensuring stability of a connection structure between the second cover plate 12 and the first cover plate 11.

With reference to FIG. 9, the first groove 113 surrounds the through hole 111, so that the through hole 111 can be closed when the second cover plate 12 is connected to the bottom wall of the first groove 113, which is conducive to simplifying the configuration of the second cover plate 12. When the first groove 113 surrounds the through hole 111, the side wall of the first groove 113 surrounds the through hole 111. There is a spacing distance between the side wall of the first groove 113 and the opening edge of the through hole 111 in the direction perpendicular to the first direction, so that the bottom wall of the first groove 113 has a specific area, thereby ensuring a connection area between the second cover plate 12 and the bottom wall of the first groove 113. Compared with a case in which the side wall of the first groove 113 is flush with the inner wall of the through hole 111, this is conducive to improving connection stability between the second cover plate 12 and the first cover plate 11.

The first groove 113 is in communication with the through hole 111; that is, the bottom wall of the first groove 113 is provided with the through hole 111. This is conducive to simplifying the configuration of the first groove 113 and the through hole 111. The second cover plate 12 is attached to the bottom wall of the first groove 113, and at least part of the second cover plate 12 is located in the first groove 113. In the first direction, a thickness of the second cover plate 12 and a depth of the first groove 113 at least partially overlap; that is, the thickness of the second cover plate 12 and the thickness of the first cover plate 11 at least partially overlap in the first direction, thereby reducing the thickness of the cover plate component 10 in the first direction, that is, reducing the thickness of the terminal structural component 100 in the first direction. This is conducive to lightness and thinness of the terminal structural component 100.

In an embodiment, with reference to FIG. 4, in the direction perpendicular to the first direction, there is a spacing distance between a side wall of the second cover plate 12 and the side wall of the first groove 113, providing a larger space for the first groove 113 to accommodate the second cover plate 12, and providing a reserved gap for a configuration error of the first groove 113 and a manufacturing error of the second cover plate 12, thereby preventing the second cover plate 12 from being unable to be mounted into the first groove 113. This is conducive to simplifying the mounting of the second cover plate 12 in the first groove 113. In addition, the following problem is avoided: When the contact between the side wall of the second cover plate 12 and the side wall of the first groove 113 is too tight, in a case of thermal expansion of the first cover plate 11 and/or the second cover plate 12, the first cover plate 11 and the second cover plate 12 stamp against each other at the contact position, causing damage to the first cover plate 11 and the second cover plate 12. This is conducive to providing room for moderate deformation of the first cover plate 11 and the second cover plate 12, thereby improving the service life of the first cover plate 11 and the second cover plate 12.

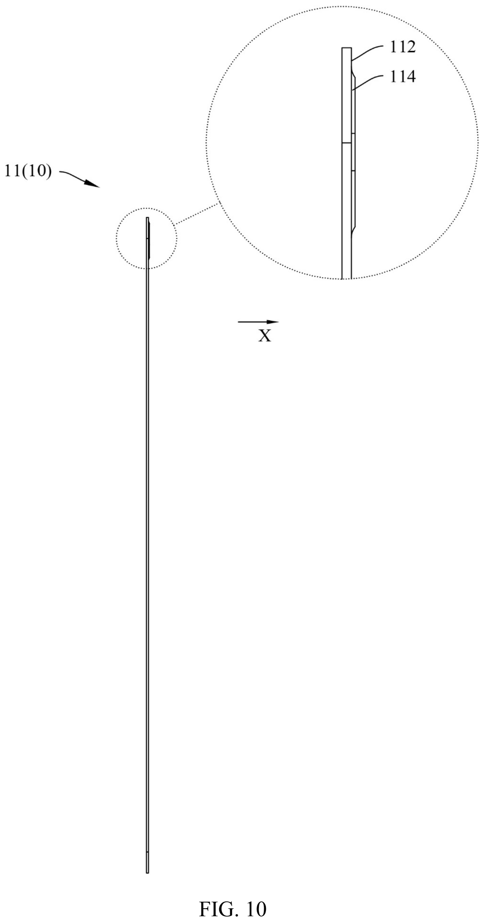

In a possible implementation, refer to FIG. 3, FIG. 7, FIG. 8, FIG. 9, and FIG. 10, where FIG. 10 is a side view and a partial enlarged view of a first cover plate according to an implementation of this application. The outer surface 112 of the first cover plate 11 is provided with a protruding portion 114. The protruding portion 114 protrudes from the outer surface 112 in the first direction (the X direction as in FIG. 3), the protruding portion 114 surrounds at a periphery of the first groove 113, and the protruding portion 114 completely surrounds the first groove 113. When the second cover plate 12 is located in the first groove 113, the protruding portion 114 surrounds the second cover plate 12. A surface of one side of the protruding portion 114 that is close to the first groove 113 encloses the second cover plate 12 in the direction perpendicular to the first direction. The protruding portion 114 can limit the second cover plate 12 in the direction perpendicular to the first direction, which is conducive to improving stability of a position of the second cover plate 12.

The protruding portion 114 and the first cover plate 11 may be formed as an integral structure. There may be a spacing distance between the surface of the one side of the protruding portion 114 that is close to the first groove 113 and the side wall of the first groove 113, so that the depth of the first groove 113 is a distance from the bottom wall of the first groove 113 to the outer surface 112 in the first direction. Alternatively, the surface of the one side of the protruding portion 114 that is close to the first groove 113 may form the side wall of the first groove 113, so that the depth of the first groove 113 is a sum of the distance from the bottom wall of the first groove 113 to the outer surface 112 in the first direction and a distance that the protruding portion 114 protrudes from the outer surface 112 in the first direction.

In an embodiment, the surface of the one side of the protruding portion 114 that is close to the first groove 113 forms the side wall of the first groove 113, which is conducive to increasing the depth of the first groove 113 in the first direction. The first groove 113 is configured to accommodate the second cover plate 12, so that the thickness of the second cover plate 12 in the first direction can be appropriately increased, which is conducive to improving structural strength of the second cover plate 12. The impact resistance of the second cover plate 12 is enhanced, thereby improving protection of the lens component 30 by the second cover plate 12. With reference to FIG. 10, a surface of one side of the protruding portion 114 that is away from the first groove 113 may be a smooth curved surface. Two sides of the curved surface in the first direction are respectively smoothly connected to a surface of the protruding portion 114 facing away from the outer surface 112 and the outer surface 112, and the curved surface is recessed toward the outer surface 112, to enable smooth structural transition between the protruding portion 114 and the outer surface 112 of the first cover plate 11, thereby improving the aesthetic appeal and tactile feel of the first cover plate 11.

In the first direction, a height of the second cover plate 12 relative to the bottom wall of the first groove 113 is a distance, in the first direction, between a surface of the second cover plate 12 facing away from the lens component 30 and the bottom wall of the first groove 113; and a height of the protruding portion 114 relative to the bottom wall of the first groove 113 is a maximum height of the protruding portion 114 protruding from the bottom wall of the first groove 113 in the first direction. When the surface of the one side of the protruding portion 114 that is close to the first groove 113 forms the side wall of the first groove 113, the height of the protruding portion 114 relative to the bottom wall of the first groove 113 is the depth of the first groove 113.

In some embodiments, in the first direction, the height of the second cover plate 12 relative to the bottom wall of the first groove 113 may be less than or equal to the height of the protruding portion 114 relative to the bottom wall of the first groove 113, so that the second cover plate 12 is completely accommodated in the first groove 113, which is conducive to protection of the second cover plate 12 by the protruding portion 114. In some other embodiments, alternatively, the height of the second cover plate 12 relative to the bottom wall of the first groove 113 may be greater than the height of the protruding portion 114 relative to the bottom wall of the first groove 113, so that one part of the second cover plate 12 is accommodated in the first groove 113, and the other part of the second cover plate 12 extends in the first direction from the opening of the first groove 113, which is conducive to reduction of the height of the protruding portion 114 relative to the bottom wall of the first groove 113, that is, reduction of a height of the protruding portion 114 relative to the outer surface 112 of the first cover plate 11, so that transition between the protruding portion 114 and the outer surface 112 of the first cover plate 11 is smoother.

In an embodiment, with reference to FIG. 5, in the first direction (the X direction as in FIG. 5), the height of the second cover plate 12 relative to the bottom wall of the first groove 113 is H2, and the height of the protruding portion 114 relative to the bottom wall of the first groove 113 is H3. The first cover plate 11 and the second cover plate 12 meet a relation: H2≤H3, so that the height of the second cover plate 12 relative to the bottom wall of the first groove 113 is less than or equal to the height of the protruding portion 114 relative to the bottom wall of the first groove 113. The protruding portion 114 is flush with the second cover plate 12 or protrudes from the second cover plate 12 in the first direction. The protruding portion 114 completely encloses the second cover plate 12, so that the protruding portion 114 can limit the second cover plate 12, which is conducive to improving stability of the position of the second cover plate 12.

With reference to FIG. 3, the second cover plate 12 closes the through hole 111, and part of the lens component 30 is located in the through hole 111, so that the second cover plate 12 and the lens component 30 are disposed opposite to each other in the first direction, and the second cover plate 12 is in contact with the lens component 30. When the side of the cover plate component 10 on which the second cover plate 12 is disposed is in contact with an object such as the ground, because the protruding portion 114 protrudes from the second cover plate 12 in the first direction, the protruding portion 114 can be in contact with the object such as the ground earlier than the second cover plate 12. This reduces impact on the second cover plate 12 and therefore reduces impact on the lens component 30 that is in contact with the second cover plate 12, which is conducive to protection of the lens component 30. For example, the surface of the one side of the protruding portion 114 that is close to the first groove 113 forms the side wall of the first groove 113, and the second cover plate 12 is completely accommodated in the first groove 113. The side wall of the first groove 113 limits the second cover plate 12, which is conducive to improving stability of the position of the second cover plate 12.

In a possible implementation, with reference to FIG. 5, in the first direction, there is a spacing distance H1 between the bottom wall of the first groove 113 and the outer surface 112 of the first cover plate 11. The first cover plate 11 and the second cover plate 12 meet a relation: H1<H2. The spacing distance is less than the height of the second cover plate 12 relative to the bottom wall of the first groove 113, so that the second cover plate 12 protrudes from the first cover plate 11 in the first direction. This can properly reduce the depth of the first groove 113 in the first direction, ensuring a thickness of the first cover plate 11 at the first groove 113, that is, ensuring structural strength of the first cover plate 11 at the first groove 113. The first cover plate 11 has strong impact resistance, which is conducive to ensuring the protection of the lens component 30 by the cover plate component 10.

When the thickness of the first cover plate 11 and the thickness of the second cover plate 12 in the first direction remain unchanged, if the second cover plate 12 does not protrude in the first direction from the first cover plate 11, the first cover plate 11 needs to be provided with a first groove 113 with a larger depth in the first direction to accommodate the second cover plate 12. As a result, the thickness of the first cover plate 11 at the first groove 113 is reduced, thereby reducing structural strength of the first cover plate 11 at the first groove 113.

In the first direction, the thickness of the first cover plate 11, the thickness of the second cover plate 12, and the spacing distance between the bottom wall of the first groove 113 and the outer surface 112 of the first cover plate 11 may be set according to actual requirements, to ensure structural strength of the first cover plate 11 and the second cover plate 12, and avoid an excessive step height between the second cover plate 12 and the first cover plate 11, which affects user experience. The step height between the second cover plate 12 and the first cover plate 11 is a distance between the surface of the second cover plate 12 facing away from the first cover plate 11 and the outer surface 112 of the first cover plate 11 in the first direction. When the step height between the second cover plate 12 and the first cover plate 11 is relatively small, structural transition between the second cover plate 12 and the first cover plate 11 is relatively smooth, and the protruding portion 114 may not be provided on the outer surface 112 for transition.

In an embodiment, with reference to FIG. 3, the outer surface 112 of the first cover plate 11 is provided with the protruding portion 114, and the surface of the one side of the protruding portion 114 that is close to the first groove 113 forms the side wall of the first groove 113. In the first direction, the spacing distance between the bottom wall of the first groove 113 and the outer surface 112 of the first cover plate 11 is less than the height of the second cover plate 12 relative to the bottom wall of the first groove 113, and the height of the second cover plate 12 relative to the bottom wall of the first groove 113 is less than the height of the protruding portion 114 relative to the bottom wall of the first groove 113. The second cover plate 12 is completely accommodated in the first groove 113, and the surface of the one side of the protruding portion 114 that is close to the first groove 113 forms the side wall of the first groove 113. This not only allows the protruding portion 114 to provide structural transition between the second cover plate 12 and the first cover plate 11, making a surface of the side of the cover plate component 10 on which the second cover plate 12 is disposed smoother, but also limits the second cover plate 12 by using the height of the protruding portion 114 protruding from the outer surface 112 in the first direction. This reduces the depth of the first groove 113 provided on the first cover plate 11, so that the thickness of the first cover plate 11 at the first groove 113 is relatively large, ensuring structural strength and impact resistance of the first cover plate 11 at the first groove 113. In addition, the second cover plate 12 protrudes from the outer surface 112 of the first cover plate 11, and the second cover plate 12 is lower than the protruding portion 114. In this way, when the side of the cover plate component 10 on which the second cover plate 12 is disposed is in contact with an object such as the ground, the protruding portion 114 can be in contact with the object such as the ground earlier than the second cover plate 12. This reduces impact on the second cover plate 12 and is conducive to protection of the lens component 30.

In an embodiment, with reference to FIG. 3 and FIG. 5, a first adhesive member 261 is disposed on the bottom wall of the first groove 113, and the first adhesive member 261 is located between the first cover plate 11 and the second cover plate 12, for bonding the second cover plate 12 to the first cover plate 11. The first adhesive member 261 has a specific thickness in the first direction. In the first direction, the height of the second cover plate 12 relative to the bottom wall of the first groove 113 is a sum of the thickness of the second cover plate 12 and the thickness of the first adhesive member 261.

In a possible implementation, with reference to FIG. 5, in the first direction, the thickness of the second cover plate 12 is less than the thickness of the first cover plate 11. Compared with a case in which the thickness of the second cover plate 12 is greater than or equal to the thickness of the first cover plate 11, the second cover plate 12 can be completely located in the first groove 113, and the depth of the first groove 113 in the first direction is relatively small. In this way, the first cover plate 11 has a specific thickness at the first groove 113, ensuring structural strength of the first cover plate 11 at the first groove 113. The first cover plate 11 has strong impact resistance, which is conducive to ensuring the protection of the lens component 30 by the cover plate component 10. In addition, the second cover plate 12 has a relatively small thickness, so that a height of the second cover plate 12 protruding from the outer surface 112 in the first direction is relatively small. This is conducive to reduction of the thickness of the cover plate component 10 in the first direction, enabling miniaturization of the terminal structural component 100. Furthermore, this results in a relatively small step height between the first cover plate 11 and the second cover plate 12, and structural transition between the second cover plate 12 and the first cover plate 11 is relatively smooth, which is conducive to ensuring that the cover plate component 10 has a relatively good appearance and use experience.

The second cover plate 12 has a smaller thickness than the first cover plate 11. In order not to affect the impact resistance of the second cover plate 12, hardness of the second cover plate 12 is greater than hardness of the first cover plate 11, thereby ensuring structural strength of the second cover plate 12 with a relatively small thickness, and ensuring protection of the lens component 30 by the cover plate component 10 while the cover plate component 10 has a relatively small thickness in the first direction.

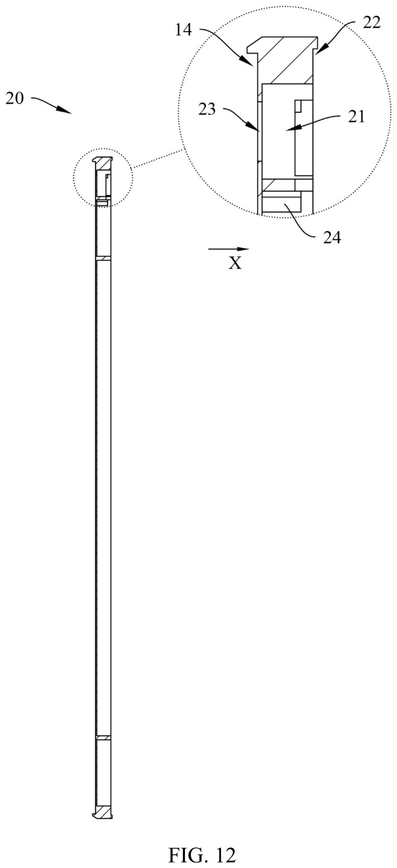

In a possible implementation, refer to FIG. 3, FIG. 8, FIG. 11, and FIG. 12, where FIG. 12 is a sectional view, along C-C, and a partial enlarged view of the middle frame according to the implementation shown in FIG. 11. In the first direction (the X direction as in FIG. 3 and FIG. 12), a surface of the middle frame 20 facing the first cover plate 11 is provided with a second groove 22, and an opening and a bottom wall of the second groove 22 are disposed opposite to each other in the first direction.

The second groove 22 is configured to accommodate the first cover plate 11. The first cover plate 11 is connected to the bottom wall of the second groove 22. The bottom wall of the second groove 22 is further configured to support the second cover plate 12. This is similar to the design of the first groove 113 and the second cover plate 12. Compared with a case in which the bottom wall of the second groove 22 supports the first cover plate 11 and a side wall of the second groove 22 is connected to the first cover plate 11, the bottom wall of the second groove 22 both supporting and being connected to the first cover plate 11 is conducive to simplifying a process of connecting the first cover plate 11 and the middle frame 20. In addition, the middle frame 20 is configured to support the lens component 30 and the cover plate component 10, and the middle frame 20 needs to have a specific thickness in the first direction, to ensure structural strength of the middle frame 20. A depth of the second groove 22 on the middle frame 20 in the first direction is limited, and therefore an area of the side wall of the second groove 22 is relatively small. If the first cover plate 11 is connected to the side wall of the second groove 22, there is a relatively small connection area between the first cover plate 11 and the middle frame 20, which is not conducive to stability of a connection between the first cover plate 11 and the middle frame 20. The first cover plate 11 being connected to the bottom wall of the second groove 22 is conducive to making full use of space of the middle frame 20 perpendicular to the first direction, ensuring that there is a relatively large connection area between the first cover plate 11 and the middle frame 20, thereby ensuring stability of a connection structure between the cover plate component 10 and the middle frame 20.

The second groove 22 surrounds the opening of the accommodation groove 21, so that when the first cover plate 11 is connected to the bottom wall of the second groove 22, the through hole 111 can be opposite to the opening of the accommodation groove 21. When the first cover plate 11 is connected to the middle frame 20, the side wall of the second groove 22 surrounds the middle frame 20, so that the side wall of the second groove 22 encloses the first cover plate 11 in the direction perpendicular to the first direction, enabling protection of the first cover plate 11 by the middle frame 20 in the direction perpendicular to the first direction.

With reference to FIG. 11 and FIG. 12, the second groove 22 is in communication with the accommodation groove 21; that is, the bottom wall of the second groove 22 is provided with the accommodation groove 21. This is conducive to simplifying the configuration of the second groove 22 and the accommodation groove 21. The first cover plate 11 is attached to the bottom wall of the second groove 22, and at least part of the first cover plate 11 is located in the second groove 22. In the first direction, a thickness of the first cover plate 11 and a depth of the second groove 22 at least partially overlap; that is, the thickness of the first cover plate 11 and the thickness of the middle frame 20 at least partially overlap in the first direction, thereby reducing the thickness of the terminal structural component 100 in the first direction. This is conducive to lightness and thinness of the terminal structural component 100.

In an embodiment, with reference to FIG. 3, in the direction perpendicular to the first direction, there is a spacing distance between a side wall of the first cover plate 11 and the side wall of the second groove 22, providing a larger space for the second groove 22 to accommodate the first cover plate 11, and providing a reserved gap for a configuration error of the second groove 22 and a manufacturing error of the first cover plate 11, thereby preventing the first cover plate 11 from being unable to be mounted into the second groove 22. This is conducive to simplifying the mounting of the first cover plate 11 in the second groove 22. In addition, the following problem is avoided: When the contact between the side wall of the first cover plate 11 and the side wall of the second groove 22 is too tight, in a case of thermal expansion of the first cover plate 11 and/or the middle frame 20, the first cover plate 11 and the middle frame 20 stamp against each other at the contact position, causing damage to the first cover plate 11 and the middle frame 20. This is conducive to providing room for moderate deformation of the first cover plate 11 and the middle frame 20, thereby improving the service life of the first cover plate 11 and the middle frame 20.

In some embodiments, in the first direction, the height of the first cover plate 11 relative to the bottom wall of the second groove 22 may be less than or equal to the depth of the second groove 22, so that the first cover plate 11 is completely accommodated in the second groove 22, which is conducive to protection of the first cover plate 11 by the middle frame 20. In some other embodiments, alternatively, the height of the first cover plate 11 relative to the bottom wall of the second groove 22 may be greater than the depth of the second groove 22, so that one part of the first cover plate 11 is accommodated in the second groove 22, and the other part of the first cover plate 11 extends in the first direction from the opening of the second groove 22, which is conducive to reduction of the depth of the second groove 22, so that the middle frame 20 has a specific thickness, ensuring structural strength of the middle frame 20.

In an embodiment, with reference to FIG. 3, a second adhesive member 262 is disposed on the bottom wall of the second groove 22, and the second adhesive member 262 is located between the middle frame 20 and the first cover plate 11, for bonding the first cover plate 11 to the middle frame 20. The second adhesive member 262 has a specific thickness in the first direction. In the first direction, the height of the first cover plate 11 relative to the bottom wall of the second groove 22 is a sum of the thickness of the first cover plate 11 and the thickness of the second adhesive member 262.

A design idea of the second groove 22 is similar to a design idea of the first groove 113, and both can improve connection stability of components in the terminal structural component 100 and allow thicknesses of two connected components to at least partially overlap in the first direction, thereby reducing the thickness of the terminal structural component 100 in the first direction, and enabling lightness and thinness of the terminal structural component 100.

In a possible implementation, with reference to FIG. 3, the projection of the second cover plate 12 in the first direction partially overlaps the projection of the middle frame 20 in the first direction, and the middle frame 20 can indirectly support the second cover plate 12, so that the middle frame 20 and the first cover plate 11 are both configured to support the second cover plate 12, which is conducive to improving stability of the position of the second cover plate 12.

In a possible implementation, with reference to FIG. 11 and FIG. 12, a surface of the middle frame 20 facing the first cover plate 11 is provided with an engaging portion 24, and a surface of the first cover plate 11 facing the middle frame 20 is provided with an engaging structure corresponding to the engaging portion 24. The engaging structure on the first cover plate 11 and the engaging portion 24 on the middle frame 20 engage with each other to further improve stability of the connection between the first cover plate 11 and the middle frame 20.

The engaging portion 24 is located outside the accommodation groove 21, and the engaging portion 24 is provided close to the accommodation groove 21, so that a position of the engaging portion 24 is close to the lens component 30, which is conducive to improving stability of a connection between the first cover plate 11 and the middle frame 20 near the lens component 30. When the terminal structural component 100 is subject to an external impact force, a connection structure between the first cover plate 11 and the middle frame 20 near the lens component 30 is not easily damaged, and the cover plate component 10 and the middle frame 20 can keep enclosing the lens component 30, which is conducive to improving protection of the lens component 30 by the cover plate component 10 and the middle frame 20. There may be at least two engaging portions 24, and the at least two engaging portions 24 are evenly provided around the accommodation groove 21.

In a possible implementation, with reference to FIG. 3 and FIG. 8, when the second cover plate 12 closes the through hole 111, the lens component 30 is located between the second cover plate 12 and the bottom wall of the accommodation groove 21. The second cover plate 12 and the bottom wall of the accommodation groove 21 respectively apply opposing forces in the first direction (the X direction as in FIG. 3) to the lens component 30, and the second cover plate 12 and the bottom wall of the accommodation groove 21 clamp to secure the lens component 30. The terminal structural component 100 further includes a cushioning member 240. The cushioning member 240 is located between the lens component 30 and the second cover plate 12. The cushioning member 240 is also located between the second cover plate 12 and the bottom wall of the accommodation groove 21, and the second cover plate 12 and the bottom wall of the accommodation groove 21 also clamp the cushioning member 240.

The cushioning member 240 has a specific thickness in the first direction, so that the lens component 30 and the second cover plate 12 are spaced apart. The cushioning member 240 is elastic and can deform when being subject to force, so that a spacing distance between the lens component 30 and the second cover plate 12 can be adjusted according to a deformation degree of the cushioning member 240. In this way, the second cover plate 12 and the bottom wall of the accommodation groove 21 keep clamping to secure the lens component 30, which is conducive to improving stability of the position of the lens component 30 relative to the middle frame 20.

In an embodiment, a side of the lens component 30 that is close to the bottom wall of the accommodation groove 21 is a light-incident side of the lens component 30, and a side of the lens component 30 that is close to the cover plate component 10 is a light-emergent side of the lens component 30. The lens component 30 further includes a sensor chip. The sensor chip of the lens component 30 is located on the light-emergent side of the lens component 30; that is, the sensor chip of the lens component 30 is close to the cover plate component 10. The provision of the cushioning member 240 between the second cover plate 12 and the lens component 30 allows for adjustment, by deformation of the cushioning member 240, to a pressure exerted by the second cover plate 12 on the sensor chip of the lens component 30, thereby preventing damage to the sensor chip caused by excessive pressure exerted by the second cover plate 12 to the sensor chip of the lens component 30.

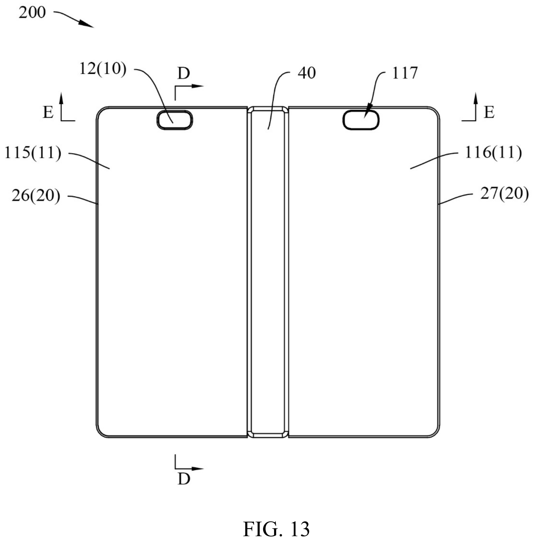

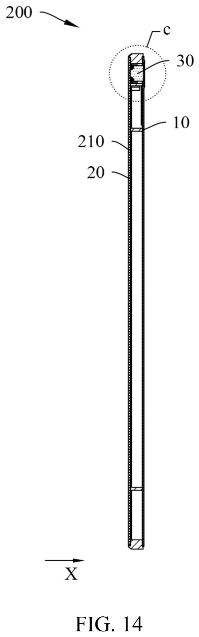

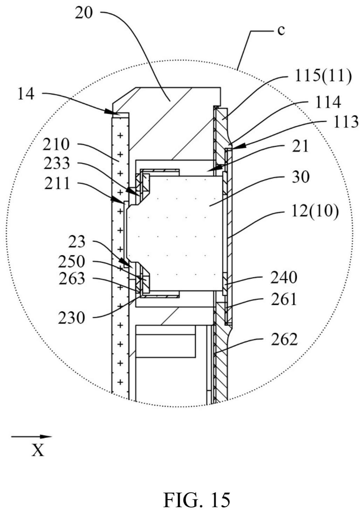

This application further provides a terminal device 200. Refer to FIG. 13, FIG. 14, and FIG. 15, where FIG. 13 is a diagram of a structure of a terminal device 200 according to an implementation of this application, FIG. 14 is a sectional view, along D-D, of the terminal device 200 according to the implementation shown in FIG. 13, and FIG. 15 is an enlarged view, at c, of the terminal device 200 according to the implementation shown in FIG. 14. The terminal device 200 includes a terminal structural component 100 according to any one of the foregoing implementations and a screen 210. The screen 210 is located on a side of the terminal structural component 100 in a first direction (an X direction as in FIG. 14 and FIG. 15). The screen 210 is connected to the middle frame 20 of the terminal structural component 100, and the screen 210 is located on a side of the middle frame 20 that is away from the cover plate component 10, so that the middle frame 20 is located between the screen 210 and the cover plate component 10.

At least part of the screen 210 is connected to at least part of the middle frame 20 in the first direction. A projection area of the screen 210 in the first direction is less than or equal to a projection area of the middle frame 20 in the first direction. In addition, a projection of the screen 210 in the first direction falls within a projection of the middle frame 20 in the first direction, or a projection of the screen 210 in the first direction completely overlaps a projection of the middle frame 20 in the first direction. A size relationship between areas of the projection of the screen 210 in the first direction and the projection of the cover plate component 10 in the first direction may be set according to actual requirements. This is not limited in this application.

In an embodiment, with reference to FIG. 14, the cover plate component 10, the middle frame 20, and the screen 210 are sequentially connected in the first direction, both the projection areas of the cover plate component 10 and the screen 210 in the first direction are less than the projection area of the middle frame 20 in the first direction, both the projections of the cover plate component 10 and the screen 210 in the first direction fall within the projection of the middle frame 20 in the first direction, and in the direction perpendicular to the first direction, there is a spacing distance between each of the cover plate component 10 and the screen 210, and the surrounding edges of the middle frame 20. This prevents the cover plate component 10 and the screen 210 from protruding from the surrounding edges of the middle frame 20, which is conducive to improving aesthetics of the terminal device 200. In addition, this prevents the cover plate component 10 and the screen 210 from being susceptible to impact of external objects, thereby enabling protection of the cover plate component 10 and the screen 210 by the middle frame 20.

In an embodiment, with reference to FIG. 12 and FIG. 15, a surface of the middle frame 20 facing away from the first cover plate 11 is provided with a third groove 14, and an opening and a bottom wall of the third groove 14 are disposed opposite to each other in the first direction (the X direction as in FIG. 12 and FIG. 15). A lens hole 23 extends through the bottom wall of the accommodation groove 21 and the bottom wall of the third groove 14, so that the accommodation groove 21, the lens hole 23, and the third groove 14 are sequentially in communication. The third groove 14 is configured to accommodate the screen 210, and the screen 210 is connected to the bottom wall of the third groove 14, to ensure that there is a relatively large connection area between the screen 210 and the middle frame 20, thereby ensuring stability of a connection between the screen 210 and the middle frame 20. The third groove 14 surrounds the lens hole 23, so that the lens hole 23 can be closed by the screen 210 when the screen 210 is connected to the bottom wall of the third groove 14, which is conducive to simplifying the configuration of the screen 210. In addition, when the screen 210 is connected to the bottom wall of the third groove 14, a side wall of the third groove 14 encloses the screen 210, and limits the screen 210 in the direction perpendicular to the first direction, which is conducive to improving stability of a position of the screen 210.

The screen 210 is attached to the bottom wall of the third groove 14, and at least part of the screen 210 is located in the third groove 14. In the first direction, a thickness of the screen 210 and a depth of the third groove 14 at least partially overlap; that is, the thickness of the screen 210 and the thickness of the middle frame 20 at least partially overlap in the first direction, thereby reducing the total thickness of the screen 210 and the middle frame 20 in the first direction, that is, reducing the thickness of the terminal device 200 in the first direction. This is conducive to lightness and thinness of the terminal device 200.

In a possible implementation, with reference to FIG. 11, FIG. 12, and FIG. 15, the bottom wall of the accommodation groove 21 is provided with the lens hole 23, the lens hole 23 extends through the bottom wall of the accommodation groove 21 in the first direction, and the lens hole 23 is in communication with the accommodation groove 21. Part of the lens component 30 is located in the lens hole 23, so that one part of the lens component 30 is located in the accommodation groove 21 of the middle frame 20, and the other part of the lens component 30 is located in the lens hole 23 at the bottom wall of the accommodation groove 21. Both the accommodation groove 21 and the lens hole 23 are configured to accommodate the lens component 30.

The screen 210 closes the lens hole 23; that is, the screen 210 completely covers the lens hole 23 in the first direction. An area of the screen 210 is greater than or equal to the area of the lens hole 23; that is, a projection area of the screen 210 in the first direction is greater than or equal to a projection area of the edge of the lens hole 23 in the first direction. In addition, the projection of the edge of the lens hole 23 in the first direction falls within a projection of the screen 210 in the first direction. The lens hole 23 is closed by the screen 210, ensuring sealing of the lens component 30 by the cover plate component 10, the middle frame 20, and the screen 210. There is relatively good sealing inside the accommodation groove 21, preventing external substances such as dust from entering the lens component 30, thereby ensuring an imaging effect of the lens component 30.

The screen 210 is provided with a light-transmitting region that is disposed opposite to the lens hole 23 in the first direction, so that external light can enter the lens component 30 through the light-transmitting region and the lens hole 23, for imaging of the lens component 30. In an embodiment, a side of the lens component 30 that is close to the bottom wall of the accommodation groove 21 is a light-incident side of the lens component 30, and a side of the lens component 30 that is close to the cover plate component 10 is a light-emergent side of the lens component 30. Both an area of the lens hole 23 and an area of the light-transmitting region are greater than an area of a light-incident hole of the lens component 30, preventing the middle frame 20 and the screen 210 from blocking light entering the lens component 30, so that external light can smoothly enter the lens component 30.

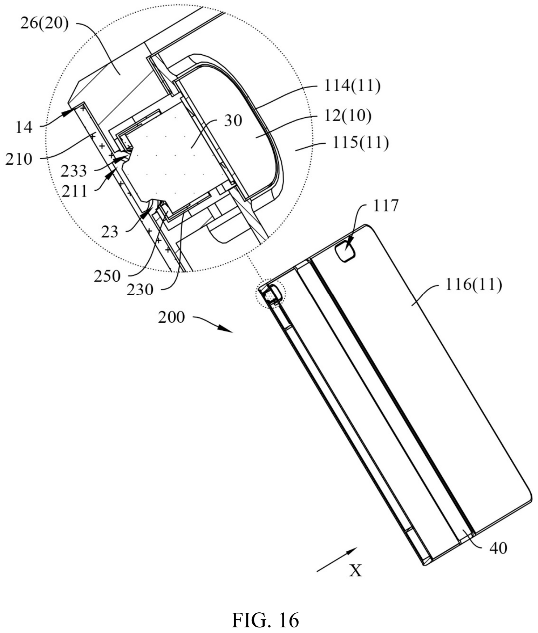

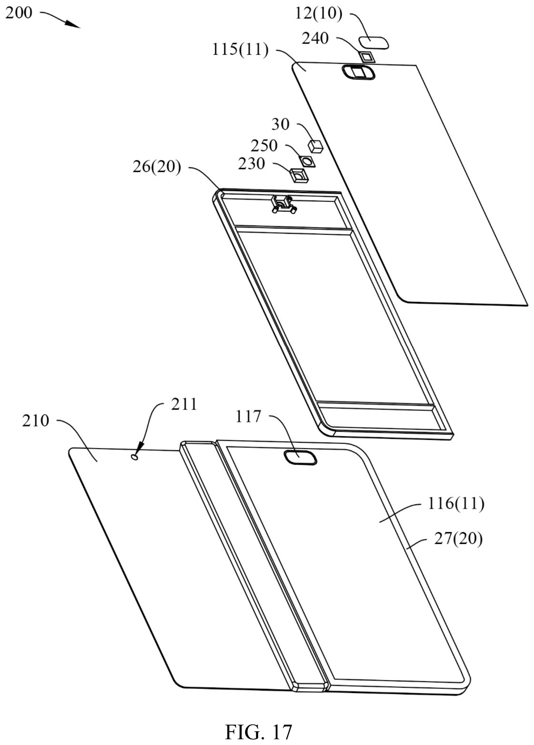

Refer to FIG. 15, FIG. 16, and FIG. 17, where FIG. 16 is a sectional perspective view, along D-D, and a partial enlarged view of the terminal device 200 according to the implementation shown in FIG. 13, and FIG. 17 is an exploded view of the terminal device 200 according to the implementation shown in FIG. 13. In the first direction, the surface of the screen 210 facing the middle frame 20 is provided with an avoidance groove 211, and an opening and a bottom wall of the avoidance groove 211 are disposed opposite to each other in the first direction. The avoidance groove 211 is in communication with the lens hole 23, and the lens component 30 protrudes from the lens hole 23, so that part of the lens component 30 extend in the first direction from the lens hole 23 into the avoidance groove 211.

One part of the lens component 30 is located in the accommodation groove 21 of the middle frame 20, and the other part of the lens component 30 is located in the lens hole 23 and the avoidance groove 211. The accommodation groove 21, the lens hole 23, and the avoidance groove 211 are all configured to accommodate the lens component 30. In an embodiment, the lens component 30 is partially located in the through hole 111 of the first cover plate 11, partially located in the accommodation groove 21, partially located in the lens hole 23, and partially located in the avoidance groove 211. The through hole 111, the accommodation groove 21, the lens hole 23, and the avoidance groove 211 are all configured to accommodate the lens component 30.

On the premise of accommodation of the lens component 30 by the terminal device 200, the avoidance groove 211 is provided on the screen 210. The length of the lens component 30 and a thickness of the avoidance groove 211 partially overlap in the first direction, so that the terminal device 200 is reduced by a thickness of an overlapping part between the lens component 30 and the screen 210 in the first direction, and a thickness of the terminal device 200 in the first direction is reduced. This is conducive to lightness and thinness of the terminal device 200, thereby improving portability of the terminal device 200.

In an embodiment, with reference to FIG. 15, there is a spacing distance between the bottom wall of the avoidance groove 211 and the lens component 30 in the first direction, providing a larger space for the avoidance groove 211 to accommodate the lens component 30, which is conducive to simplifying the configuration of the screen 210. In addition, this prevents the bottom wall of the avoidance groove 211 from being in contact with the lens component 30 that results in friction between the bottom wall of the avoidance groove 211 and the lens component 30, which is conducive to protection of the lens component 30 by the screen 210.

In a possible implementation, with reference to FIG. 13, the middle frame 20 includes a first middle frame 26 and a second middle frame 27. The first middle frame 26 and the second middle frame 27 are rotatably connected. The terminal structural component 100 further includes a connecting member 40 that is disposed between the first middle frame 26 and the second middle frame 27, so that the first middle frame 26 and the second middle frame 27 rotate about the connecting member 40 as a pivot.

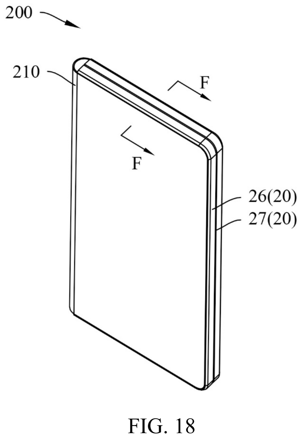

The first cover plate 11 includes a primary cover plate 115 and a secondary cover plate 116. The primary cover plate 115 is connected to the first middle frame 26, and the secondary cover plate 116 is connected to the second middle frame 27. Refer to FIG. 13 and FIG. 18, where FIG. 18 is a diagram of a folded structure of the terminal device 200 according to the implementation shown in FIG. 13. The middle frame 20 includes an unfolded state, a folded state, and an intermediate state between the unfolded state and the folded state. The first middle frame 26 and the second middle frame can rotate relative to each other about the connecting member 40 as a pivot, so that the middle frame 20 can switch between the unfolded state and the folded state.

In the unfolded state of the middle frame 20, with reference to FIG. 13, an included angle between the first middle frame 26 and the second middle frame 27 is approximately 180°, and there is the connecting member 40 between the first middle frame 26 and the second middle frame 27, so that the first middle frame 26 and the second middle frame 27 are spaced apart, and the primary cover plate 115 and the secondary cover plate 116 are spaced apart. In the folded state of the middle frame 20, with reference to FIG. 18, an included angle between the first middle frame 26 and the second middle frame 27 is approximately 0.

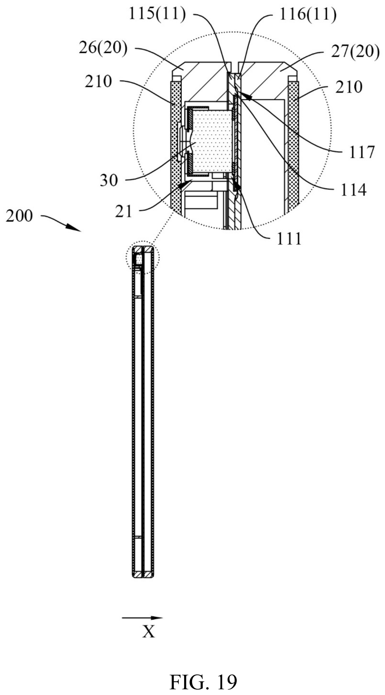

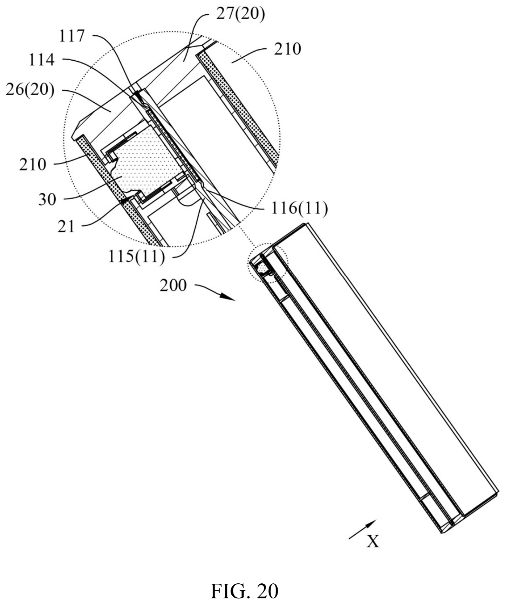

The embodiment shown in FIG. 14 and FIG. 15 discloses a schematic sectional view of the lens component 30 when the middle frame 20 is in the unfolded state. The embodiment shown in FIG. 19 and FIG. 20 discloses a schematic sectional view of the lens component 30 when the middle frame 20 is in the folded state. The unfolded state and the folded state of the middle frame 20 are described in detail below with reference to FIG. 14, FIG. 15, FIG. 19, and FIG. 20.

With reference to FIG. 13, FIG. 14, and FIG. 15, the first middle frame 26 is provided with the accommodation groove 21, so that the lens component 30 is disposed at the first middle frame 26, and the primary cover plate 115 and the first middle frame 26 are connected in the first direction. The primary cover plate 115 is provided with the through hole 111, and the second cover plate 12 closes the through hole 111, so that the second cover plate 12 is connected to the primary cover plate 115. That is, the first middle frame 26, the primary cover plate 115, and the second cover plate 12 are sequentially connected in the first direction. With reference to FIG. 15, an outer surface of the primary cover plate 115 is provided with the protruding portion 114 that surrounds a periphery of the first groove and protrudes from the outer surface of the primary cover plate 115.

Refer to FIG. 13, FIG. 19, and FIG. 20, where FIG. 19 is a sectional view, along F-F, and a partial enlarged view of the terminal device 200 according to the implementation shown in FIG. 18, and FIG. 20 is a sectional perspective view, along F-F, and a partial enlarged view of the terminal device 200 according to the implementation shown in FIG. 18. The secondary cover plate 116 is provided with a receiving groove 117 that is recessed relative to an outer surface of the secondary cover plate 116. When the middle frame 20 is in the folded state, the included angle between the first middle frame 26 and the second middle frame 27 is approximately 0, and the protruding portion 114 is accommodated in the receiving groove 117. This is conducive to reduction of the thickness of the terminal structural component 100 in the first direction when the middle frame 20 is in the folded state, enabling miniaturization of the terminal structural component 100.

In an embodiment, with reference to FIG. 19, when the middle frame 20 is in the folded state, the protruding portion 114 is accommodated in the receiving groove 117. A depth of the receiving groove 117 may be properly set so that a surface of the protruding portion 114 facing away from the first middle frame 26 can be in close contact with a bottom wall of the receiving groove 117, preventing an excessive depth of the receiving groove 117 from affecting a thickness of the secondary cover plate 116, which is conducive to ensuring structural strength of the secondary cover plate 116. A peripheral side surface of the protruding portion 114 and a side wall of the receiving groove 117 are spaced apart, so that an area of the receiving groove 117 is greater than an area of the protruding portion 114, and the side wall of the receiving groove 117 can enclose the protruding portion 114. This provides more accommodation space for the receiving groove 117 to accommodate the protruding portion 114, so that the protruding portion 114 can be smoothly accommodated in the receiving groove 117 when the middle frame 20 is folded.

The terminal device 200 includes the terminal structural component 100 and the screen 210. The screen 210 is located on a side of the middle frame 20 that is away from the cover plate component 10. In an embodiment, with reference to FIG. 19, the screen 210 may be provided on a side of the first middle frame 26 that is away from the primary cover plate 115, and the screen 210 may also be provided on a side of the second middle frame 27 that is away from the secondary cover plate 116. The screen 210 connected to the first middle frame 26 and the second middle frame 27 is an integral structure, that is, a flexible display screen.

When the middle frame 20 is in the unfolded state, with reference to FIG. 13, FIG. 14, and FIG. 15, the screen 210 is fully unfolded, and a part of the screen 210 that is connected to the first middle frame 26 and a part of the screen 210 that is connected to the second middle frame 27 are approximately located in a same plane that is perpendicular to the first direction (the X direction as shown in FIG. 14 and FIG. 15). When the middle frame 20 is in the folded state, with reference to FIG. 18, FIG. 19, and FIG. 20, the first middle frame 26 rotates relative to the second middle frame 27 about the connecting member 40 as a pivot, a part of the screen 210 that is connected to the first middle frame 26 rotates with the rotation of the first middle frame 26, and the part of the screen 210 that is connected to the first middle frame 26 and a part of the screen 210 that is connected to the second middle frame 27 approach each other, so that the screen 210 is bent. With reference to FIG. 18, a bending center of the screen 210 is bent, and in this case, the screen 210 is located on the outer side of the terminal device 200. This is conducive to an outward-folding screen design of the terminal device 200, reducing a range in which the screen 210 is disposed, thereby enabling miniaturization of the terminal device 200.

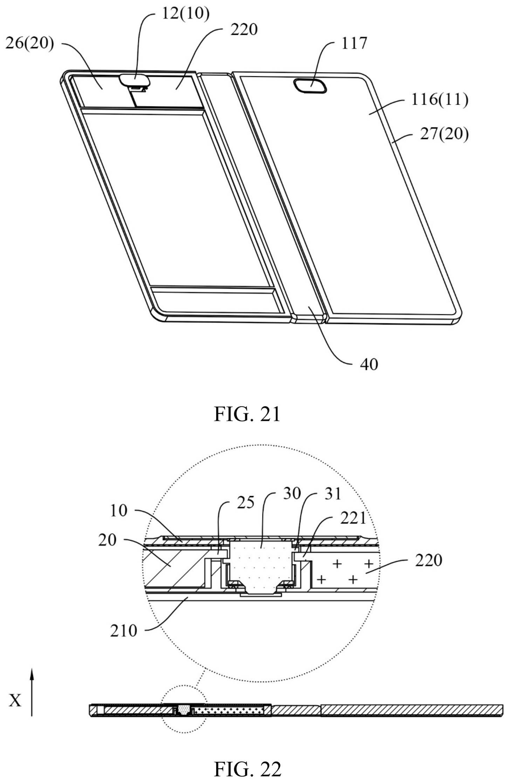

In a possible implementation, with reference to FIG. 21 and FIG. 22, FIG. 21 is a diagram of a structure of a terminal device 200 without a primary cover plate 115 according to an implementation of this application, and FIG. 22 is a sectional view, along E-E, and a partial enlarged view of the terminal device 200 according to the implementation shown in FIG. 13. The terminal device 200 further includes a speaker module 220 fixedly connected to the middle frame 20. The lens component 30 is provided with a bracket 31 located on a periphery of the lens component 30. The bracket 31 is configured to support and protect a lens in the lens component 30. The speaker module 220 is provided with a first abutting portion 221, and the middle frame 20 is provided with a second abutting portion 25. In the first direction (an X direction as in FIG. 22), the bracket 31 is located between the first abutting portion 221 and the second abutting portion 25, the first abutting portion 221 abuts against the bracket 31 in the first direction, and the second abutting portion 25 abuts against the bracket 31 in a reverse direction of the first direction. In this way, the first abutting portion 221 and the second abutting portion 25 respectively apply opposing forces to the bracket 31 in the first direction, and the middle frame 20 and the speaker module 220 clamp to secure the lens component 30, which is conducive to further improving stability of the position of the lens component 30.

In a possible implementation, refer to FIG. 14, FIG. 15, FIG. 16, FIG. 17, and FIG. 22, where FIG. 22 is a diagram of a structure of a positioning member 230 according to an implementation of this application. The terminal device 200 further includes a positioning member 230. The positioning member 230 is located in the accommodation groove 21, the positioning member 230 is connected to the bottom wall of the accommodation groove 21, at least part of the positioning member 230 is located between the lens component 30 and the bottom wall of the accommodation groove 21, and the lens component 30 is secured to the positioning member 230.

The positioning member 230 is provided with a positioning hole 233, the positioning hole 233 is in communication with the lens hole 23, and the lens component 30 sequentially passes through the positioning hole 233 and the lens hole 23 in the first direction (the X direction as in FIG. 14 and FIG. 15), so that part of the lens component 30 is located in the positioning hole 233. A center of the positioning hole 233 and a center of the lens hole 23 are on a same straight line, and the straight line extends in the first direction. During component of the terminal device 200, the center of the positioning hole 233 is first aligned with the center of the lens hole 23, and then the optical axis of the lens component 30 passes through the center of the positioning hole 233, so that positioning of the lens component 30 can be implemented, thereby improving component accuracy of the lens component 30.

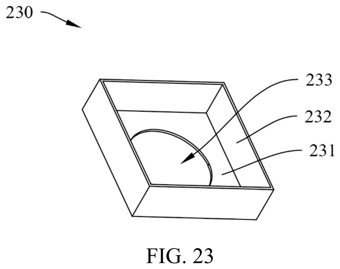

In an embodiment, with reference to FIG. 23, the positioning member 230 has a first portion 231 and a second portion 232 that are connected. The first portion 231 and the second portion 232 may be an integral structure, or may be two connected components. This is not limited in this application. The first portion 231 is connected to the bottom wall of the accommodation groove 21, the first portion 231 is provided with the positioning hole 233, the second portion 232 extends from the first portion 231 toward an opening direction of the accommodation groove 21, the second portion 232 encloses the lens component 30, and there is a spacing distance between the second portion 232 and the lens component 30, so as to simplify installation of the lens component 30 relative to the positioning member 230 and protect the lens component 30. The second portion 232 does not extend out from the opening, so that the positioning member 230 is completely accommodated in the accommodation groove 21, and the positioning member 230 does not interfere with the configuration of other components. For example, there is a spacing distance between the second portion 232 and the opening of the accommodation groove 21.

In an embodiment, with reference to FIG. 15, the terminal device 200 further includes a third adhesive member 263 and a sealing member 250, and both the third adhesive member 263 and the sealing member 250 are located in the accommodation groove 21. The third adhesive member 263 is located between the first portion 231 and the bottom wall of the accommodation groove 21, for bonding the positioning member 230 to the middle frame 20. The sealing member 250 is located between the first portion 231 and the lens component 30, the lens component 30 and the positioning member 230 clamp the sealing member 250, and the sealing member 250 is elastic, so that deformation of both the sealing member 250 and the cushioning member 240 allows for adjustment to a pressure exerted by the cover plate component 10 and the middle frame 20 to the lens component 30, preventing damage to the lens component 30.

The foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the spirit and scope of the technical solutions of embodiments of this application, and these modifications and replacements shall fall within the scope of protection of this application.

## Claims

1. A terminal structural component, comprising:
a lens component, wherein an optical axis direction of the lens component is a first direction;
a middle frame, provided with an accommodation groove, wherein part of the lens component is located in the accommodation groove; and
a cover plate component, comprising a first cover plate and a second cover plate, wherein at least part of the middle frame, at least part of the first cover plate, and part of the second cover plate are sequentially connected in the first direction, the first cover plate is provided with a through hole that is in communication with the accommodation groove, part of the lens component is located in the through hole, the second cover plate closes the through hole, and the lens component is located between the second cover plate and a bottom wall of the accommodation groove.

2. The terminal structural component according to claim 1, wherein the first cover plate has an outer surface that is a surface of the first cover plate facing away from the middle frame in the first direction, the outer surface is provided with a first groove that surrounds and is in communication with the through hole, the first groove is configured to accommodate the second cover plate, and the second cover plate is connected to a bottom wall of the first groove.

3. The terminal structural component according to claim 2, wherein the outer surface is provided with a protruding portion surrounding a periphery of the first groove.

4. The terminal structural component according to claim 3, wherein in the first direction, a height of the second cover plate relative to the bottom wall of the first groove is less than or equal to a height of the protruding portion relative to the bottom wall of the first groove.

5. The terminal structural component according to claim 3 or 4, wherein the middle frame comprises a first middle frame and a second middle frame that are rotatably connected, the first middle frame is provided with the accommodation groove, the first cover plate comprises a primary cover plate and a secondary cover plate, the primary cover plate is connected to the first middle frame and is provided with the protruding portion, and the secondary cover plate is connected to the second middle frame and is provided with a receiving groove configured to accommodate the protruding portion.

6. The terminal structural component according to claim 5, further comprising a connecting member, wherein the first middle frame and the second middle frame are rotatably connected via the connecting member, and when the first middle frame and the second middle frame are in a folded state, the receiving groove accommodates the protruding portion.

7. The terminal structural component according to any one of claims 2 to 6, wherein in the first direction, a spacing distance between the bottom wall of the first groove and the outer surface is less than a height of the second cover plate relative to the bottom wall of the first groove.

8. The terminal structural component according to any one of claims 1 to 7, wherein in the first direction, a thickness of the second cover plate is less than a thickness of the first cover plate, and hardness of the second cover plate is greater than hardness of the first cover plate.

9. The terminal structural component according to any one of claims 1 to 8, wherein in the first direction, a surface of the middle frame facing the first cover plate is provided with a second groove that surrounds an opening of the accommodation groove and is in communication with the accommodation groove, the second groove is configured to accommodate the first cover plate, and the first cover plate is connected to a bottom wall of the second groove.

10. The terminal structural component according to any one of claims 1 to 9, wherein a projection of the second cover plate in the first direction partially overlaps a projection of the middle frame in the first direction.

11. A terminal device, comprising a terminal structural component according to any one of claims 1 to 10 and a screen, wherein at least part of the screen is connected to at least part of the middle frame in the first direction, and the screen is located on a side of the middle frame that is away from the cover plate component.

12. The terminal device according to claim 11, wherein the bottom wall of the accommodation groove is provided with a lens hole, the screen closes the lens hole, a surface of the screen facing the middle frame is provided with an avoidance groove, in the first direction, that is in communication with the lens hole, the lens component protrudes from the lens hole, and part of the lens component is located in the avoidance groove.

13. The terminal device according to claim 11 or 12, further comprising a speaker module fixedly connected to the middle frame, wherein the lens component is provided with a bracket, the speaker module is provided with a first abutting portion, the middle frame is provided with a second abutting portion, the bracket is located between the first abutting portion and the second abutting portion in the first direction, the first abutting portion abuts against the bracket in the first direction, and the second abutting portion abuts against the bracket in a reverse direction of the first direction.
